(19) Europäisches Patentamt
European Patent Office
Office européen des brevets

(11) **EP 2 244 364 A1**

(12) **EUROPEAN PATENT APPLICATION**

(43) Date of publication:
**27.10.2010 Bulletin 2010/43**

(51) Int Cl.:
**H02M 3/07** (2006.01)

(21) Application number: **09158620.6**

(22) Date of filing: **23.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicants:
• **Mitsubishi Electric R&D Centre Europe B.V.**
**1119 NS Schiphol Rijk (NL)**
Designated Contracting States:
**FR**
• **Mitsubishi Electric Corporation**
**Tokyo 100-8310 (JP)**
Designated Contracting States:
**AT BE BG CH LI CY CZ DE DK EE ES FI GB GR HR HU IE IS IT LT LU LV MC MK MT NL NO PL PT RO SE SI SK TR**

(72) Inventors:
• **Buiatti, Gustavo**
**35708 Rennes Cedex 7 (FR)**
• **Maker, Hattab**
**35708 Rennes Cedex 7 (FR)**
• **Kawakami, Tomoyuki**
**Hyogo 661-8661 (JP)**
• **Voyer, Nicolas**
**35708 Rennes Cedex 7 (FR)**

(74) Representative: **Maillet, Alain**
**Cabinet Le Guen Maillet**
**5 Place Newquay**
**B.P. 70250**
**35802 Dinard Cedex (FR)**

(54) **Method and an apparatus for controlling the switches of a boost converter composed of plural bridge devices**

(57)     The present invention concerns a method for controlling the switches of a boost converter composed of plural bridge devices connected in series, each bridge device being composed of a capacitor and plural switches. The method comprises the steps of:
- controlling the switches of each bridge device of at least a part of the plural bridge devices according to a given periodical pattern during a first time period,
- controlling, during a second time period following the first time period, the switches of each bridge device of said at least part of the plural bridge devices according to a periodical pattern previously used for controlling the switches of another bridge device of said at least part of the plural bridge devices during the first time period.

Fig. 7

**Description**

The present invention relates generally to a method and an apparatus for controlling the switches of a boost converter composed of plural bridge devices.

Classical DC/DC converters use inductors in order to convert a direct current from a first voltage to a second voltage which may be larger or smaller than the first voltage.

Inductors are used for storing energy in the form of magnetic field (current) and they have many drawbacks. Inductors are heavy, their cost is relatively important because they are mainly composed of copper material.

The combination of switches and capacitors in order to replace inductors has been already proposed.

For example, charge pumps, also known as inductor less boost converters or boost converters composed of plural bridge devices use capacitors as energy storage elements. When compared to inductive switching DC/DC converters, which also use inductors as energy storage elements, charge pumps offer unique characteristics that make them attractive for certain end-user applications.

Boost converters when operating in Continuous Current Mode (CCM) increase the voltage of the input by a ratio $r = V_{out}/V_{in} = 1/(1-D)$, where D is the duty cycle (between 0 and 1) of the main switch of the boost converter.

Electrolytic capacitors are in general, the components which have a limited lifetime.

The capacitors used in boost converters composed of plural bridge devices are classically electrolytic capacitors. They may responsible for more than 50% of converters failures.

Typically, capacitors lifetime is related to the RMS (root mean square) current passing through the capacitor.

Moreover, DC/DC converter topologies using switched capacitors with periodical switching patterns are sensitive to effect of time uncertainty of switching pattern timings. As a result, voltage applied to capacitors might be subject to voltage drifts, and this drift might also lead to capacitor aging, especially when it goes beyond the rated voltage of capacitor.

The present invention aims to reduce the stresses suffered by capacitors during their operation, in order to increase capacitor's lifetime and also improving the reliability of boost converter composed of plural bridge devices.

To that end, the present invention concerns a method for controlling the switches of a boost converter composed of plural bridge devices connected in series, each bridge device being composed of a capacitor and plural switches, **characterised in that** the method comprises the steps of :

-  controlling the switches of each bridge device of at least a part of the plural bridge devices according to a given periodical pattern during a first time period,
-  controlling, during a second time period following the first time period, the switches of each bridge device of said at least part of the plural bridge devices according to a periodical pattern previously used for controlling the switches of another bridge device of said at least part of the plural bridge devices during the first time period.

The present invention concerns also an apparatus for controlling the switches of a boost converter composed of plural bridge devices connected in series, each bridge device being composed of a capacitor and plural switches, **characterised in that** the apparatus comprises :

-  means for controlling the switches of each bridge device of at least a part of the plural bridge devices according to a given periodical pattern during a first time period,
-  means for controlling, during a second time period following the first time period, the switches of each bridge device of said at least part of the plural bridge devices according to a periodical pattern previously used for controlling the switches of another bridge device of said at least part of the plural bridge devices during the first time period.

Thus, the stress suffered by the capacitor of the bridge device when first periodical pattern is controlling the bridge device can be replaced by the stress suffered by the capacitor of the bridge device when the periodical pattern which controls the switches of other bridge device in the first time period is controlling the switches of the bridge device in the second time period.

Furthermore, the stresses suffered by capacitors during their operation is adapted and noticeably can be levelled in average across capacitors. The capacitor's lifetime is increased in average and the reliability of boost converters composed of plural bridge devices is improved.

Permutation of periodical pattern across bridge devices of said at least part of the plural bridge devices. can be realised in a subset of bridge devices of same nature. Other periodical patterns of bridge devices leading to a high voltage value of bridge capacitor are not used by bridge devices of said part of bridge devices, as capacitors of bridge devices of said part of bridge devices might not support such high voltage rating.

Furthermore, stability of capacitor voltage of each bridge device having same voltage level can be realised, provided that the at least part of plural bridge devices contains bridge devices of same capacitor voltage level, even if periodical patterns used for bridge device is not tightly controlled in time. No voltage drift occurs, as charge unbalance can be smoothly spread over bridge device in said at least part of plural bridge devices.

According to a particular feature, in a first given group of successive time periods, the switches of each bridge device of said at least part of the plural bridge devices are successively controlled according to each periodical pattern used for controlling the switches of each bridge device of said at least part of the plural bridge devices during the first group of successive time periods.

Thus, the function realised by each plural bridge device in the each successive time period is realised in each time period by one and only one bridge device. As a result, the fundamental behaviour of boost converter composed of plural bridge devices is unaffected by the permutation of patterns across bridge devices.

According to a particular feature, for each bridge device of said at least part of the plural bridge device, the other bridge device which is controlled in the first time period with the periodical pattern with which the bridge device is controlled in the second time period is same over any successive time periods.

Thus, permutation rule of switching patterns across bridge device is simple and can be predefined. At each time duration, computation is not needed to determine which periodical pattern controlling another bridge in the first time period should control the bridge device during the second time period. Aging of capacitors within the at least part of plural bridge devices can be levelled assuming a constant input current level.

According to a particular feature, the method comprises further steps of:

- selecting for a second group of successive time periods following the first given group of successive time periods, other periodical patterns for controlling the switches of each bridge device of said at least part of the plural bridge devices in the time periods of the second group of successive time periods,
- successively controlling the switches of each bridge device of said at least part of the plural bridge devices according to each periodical pattern used for controlling the switches of each bridge device of said at least part of the plural bridge devices during the second group of successive time periods following the first group of successive of time periods.

Thus, the permutation procedure is independent of which periodical pattern applied to the boost converter composed of plural bridge devices. The same permutation rule can be applied for the various boost conversion ratios which can be achieved with various periodical patterns. Aging of capacitors within the first subset of bridge devices can be levelled assuming a constant input current level.

According to a particular feature, the method further contains step of selecting at each time period and for each bridge device the other bridge device which is controlled by the periodical pattern with which the bridge device is controlled in the second time period.

Thus, it is possible to better level the aging of capacitors when the level of input current is varying across consecutive time periods.

According to a particular feature, the other bridge device is selected by :

- estimating, for each periodical pattern, the current passing through one bridge device when the switches of the bridge device are controlled by the periodical pattern,
- estimating for each bridge device of said at least part of the plural bridge devices, the current cumulated over the time having passed through the bridge device,

and the other bridge device is a bridge device which estimated current cumulated over the time is higher than the estimated current cumulated over the time of the bridge device and the other bridge device is a bridge device controlled in the first time period with a periodical pattern which estimated current is higher than the estimated current of the periodical pattern which controls the switches of the bridge device in the first time period,

or the other bridge device is a bridge device which estimated current cumulated over the time is lower than the estimated current cumulated over the time of the bridge device and the other bridge device is a bridge device controlled in the first time period with a periodical pattern which estimated current is lower than the estimated current of the periodical pattern which controls the switches of the bridge device in the first time period,

or the other bridge device is the bridge device.

Thus, the aging of capacitor of the bridge can be controlled so as to follow that of capacitor of the other bridge. Effective and precise levelling of capacitor aging can be realised.

According to a particular feature, the estimated current passing through a bridge device of which the switches are controlled by one periodical pattern equals the input current of the boost converter composed of plural bridge devices averaged over the time duration times one minus the number of time intervals for which the voltage between the input and the output of the bridge device is a null value divided by the number of time intervals of the periodical pattern.

Thus, evaluation of extra aging of each capacitor brought by application of each periodical pattern to the capacitor bridge device can easily be realised as the number of time intervals for which the voltage between the input and the output of the bridge device is a null value divided by the number of time intervals of the periodical pattern is a value which can be pre-computed for each periodical pattern.

According to a particular feature, the estimated cumulative current having passed through each bridge device is incremented by the estimated current passing through a bridge device the switches of which are controlled by the periodical pattern times the duration of the time period.

Thus, estimation of aging of capacitor of each bridge device can be accurately realised along the lifetime of the boost converter composed of plural bridge devices.

According to a particular feature, the boost converter is composed of four bridge devices, said at least part of the plural bridge devices comprises a first, a second and a third bridge devices, each periodical pattern is decomposed into time intervals and in that in each time interval of periodical pattern used for controlling the switches of the first, second and third bridge devices, the voltage between the input and the output of the first, second and third bridge device is equal to a positive value or minus the first positive value or a null value and the voltage between the input and the output of the fourth bridge device is equal to four times the positive value or minus four times the positive value or a null value, and the said at least part of the plural bridge devices is composed of first, second and third bridge device.

Thus, efficient aging levelling can be realised across first, second and third bridge device, while avoiding that the voltage of capacitor of first, second and third bridge device reaches the voltage of the fourth bridge device.

Also, balancing the capacitor voltage across first, second and third bridge device can be realised even if periodical pattern is not of full rank. Capacitor voltage of first, second and third bridge device can be maintained within the voltage rating of capacitor of first, second and third bridge device.

According to a particular feature, the positive value is the result of the division of an expected value of the output voltage by the number of time intervals of the periodical patterns.

Thus, the first positive value can easily be determined from the expected output voltage level. One can then easily select the appropriate input voltage level from the first positive value and be selection of periodical pattern.

According to a particular feature, the sum of the voltages between the input and the output of a bridge device over the number of time intervals of one periodical pattern equals a null value.

Thus, over one periodical pattern, the current delivered by a constant current source, such as a photovoltaic module, equally charges and discharges the capacitors of the bridge devices, and the voltage of capacitors is stable and does not discharge assuming a constant current source.

According to a particular feature, one bridge device is connected to one of the terminals of an electric power source boosted by the boost converter composed of plural bridge devices and the boost converter composed of plural bridge devices further comprises at least another switch which is connected to the other terminal of the electric power source boosted by the boost converter composed of plural bridge devices.

Thus, the current provided by the input power source can alternately charge and discharge the capacitors of each bridge device of the boost converter composed of plural bridge devices.

According to a particular feature, for any time interval in a first subset of time intervals of the periodical pattern, the switch which is connected to the other terminal of the electric power source boosted by the boost converter composed of plural bridge devices is conducting during the time intervals of the first subset and the sum of the voltages between the input and the output of the bridge devices during the time intervals of the first subset equals an integer number $Kp$ times the first positive value.

Thus, the input voltage $Vin$ can take the value $Vout$ multiplied by $Kp$ and divided by $N$ when the main switch is conducting.

According to a particular feature, for any time interval in a second subset of time intervals of one periodical pattern, the switch which is connected to the other terminal of the electric power source boosted by the boost converter composed of plural bridge devices is not conducting during the time intervals of the second subset and the sum of the voltages between the input and the output of the bridge devices during the time intervals of the second subset equals minus a non null integer number $P$ times the first positive value.

Thus, the input voltage $Vin$ can take the value $Vout$ multiplied by $(N-P)$ and divided by $N$ when the main switch is not conducting.

According to a particular feature, the first subset of time intervals comprises $Kp$ time intervals, the second subset comprises $P$ time intervals and the number $Kp$ equals the number of time intervals of the periodical pattern minus number $P$.

Thus, the input voltage $Vin$ can take the value $Vout$ multiplied by $N-P$ and divided by $N$ at all time intervals of the pattern, and the boost converter composed of plural bridge devices can perform a boost ratio equal to $N$ divided by $N-P$, where $N$ and $P$ can flexibly be chosen so as to realise the desired boost ratio. As a result, the number of boost ratios which can be achieved with the boost converter composed of plural bridge devices is increased a lot. It is then easier to achieve the regulation of the output voltage as the number of boost ratios is increased.

The characteristics of the invention will emerge more clearly from a reading of the following description of an example embodiment, the said description being produced with reference to the accompanying drawings, among which :

Fig. 1 is an example of a boost converter composed of plural bridge devices;
Fig. 2 represents an example of an apparatus comprising a boost converter composed of plural bridge devices;
Fig. 3 represents a table representing the switching states of the switches of the boost converter composed of plural bridge devices in order to obtain different voltages on the bridges of the boost converter composed of plural bridge devices;
Fig. 4 represents a table representing the periodical patterns in order to obtain different boost ratios for different permutations of one periodical pattern.
Figs. 5a to 5c are examples of voltage values on the bridges of the boost converter composed of plural bridge devices in order to obtain a first boost ratio according to the present invention;
Figs. 6a to 6c are examples of voltage values on the bridges of the boost converter composed of plural bridge devices in order to obtain a second boost ratio according to the present invention;
Fig. 7 is an example of an algorithm for controlling the switches of a boost converter composed of plural bridge devices.

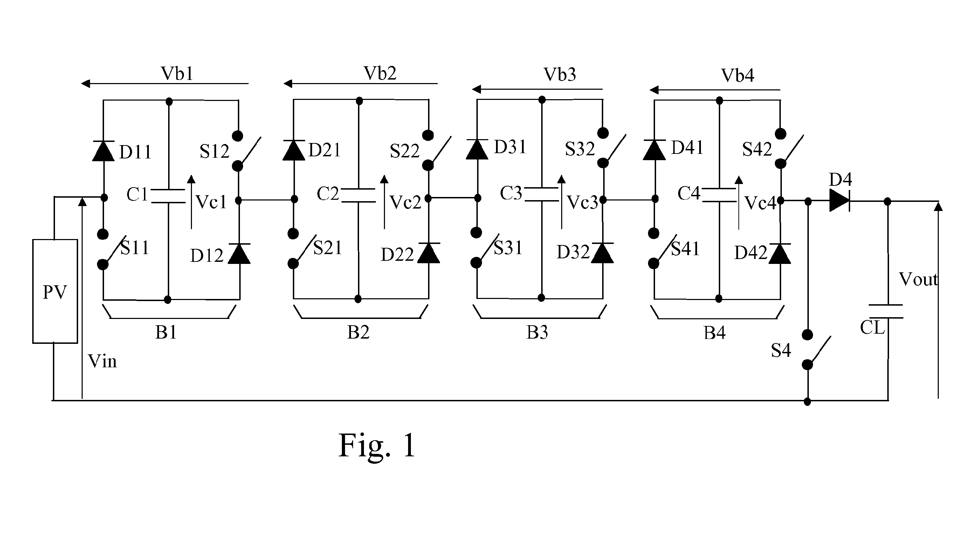

**Fig. 1** is an example of boost converter composed of plural bridge devices.

The boost converter composed of plural bridge devices is also named Reactor Less Boost Converter, herein named RLBC converter.

Basically, the inductor of the conventional DC/DC Boost converter is replaced by "n" bridge devices connected in series. Each bridge device is composed of four switches and a capacitor as shown in Fig. 1. It has to be noted here that two switches may be under the form of diodes acting as switches. This individual bridge structure is also named "bit". The boost converter composed of plural bridge devices also contains an output stage comprising a diode D4 and a switch S4.

In the Fig. 1, four bits or bridge devices B1, B2, B3 and B4 are shown and are connected in series; the fourth bit B4 is connected to the output stage.

The bit B1 is composed of two diodes D11 and D12, two switches S11 and S12 and one capacitor C1.

The bit B2 is composed of two diodes D21 and D22, two switches S21 and S22 and one capacitor C2.

The bit B3 is composed of two diodes D31 and D32, two switches S31 and S32 and one capacitor C3.

The bit B4 is composed of two diodes D41 and D42, two switches S41 and S42 and one capacitor C4.

The output stage is also connected to a capacitor CL.

For each bit Bi with i=1, 2, 3 or 4, the anode of the diode Di1 is linked to the first terminal of the switch Si1. The cathode of Di1 is linked to the first terminal of the switch Si2 and to the positive terminal of the capacitor Ci. The second terminal of the switch Si1 is linked to the negative terminal of the capacitor Ci and to the anode of the diode Di2. The cathode of the diode Di2 is linked to the second terminal of the switch Si2.

Electric DC providing means like photovoltaic elements PV provide an input voltage Vin. The positive terminal of electric DC providing means is connected to the anode of the diode D11.

The cathode of the diode D12 is connected to the anode of the diode D21.

The cathode of the diode D22 is connected to the anode of the diode D31.

The cathode of the diode D32 is connected to the anode of the diode D41.

The cathode of the diode D42 is linked to the first terminal of the switch S4 and to the anode of the diode D4. The cathode of D4 is linked to the positive terminal of the capacitor CL. The second terminal of the switch S4 is linked to the negative terminal of the capacitor CL and to the negative terminal of electric DC providing means PV.

The voltage on the capacitor CL is equal to Vout.

The difference of voltage between the input and the output of B1 is named Vb1, the difference of voltage between the input and the output of B2 is named Vb2, the difference of voltage between the input and the output of B3 is named Vb3 and the difference of voltage between the input and the output of B4 is named Vb4.

The difference of voltage in C1 is named Vc1, the difference of voltage in C2 is named Vc2, the difference of voltage in C3 is named Vc3 and the difference of voltage in C4 is named Vc4.

The main difference between conventional Boost converters and the RLBC relies on the fact that the latter can only achieve some discrete values of voltage step-up ratio (and consequently of values of duty-cycles D, where ratio = 1/(1-D)), which are dependent on the number of available "bits".

Given a vector $K = [k_1 : k_2 : k_3 : k_4]$ of integer numbers, switches control patterns for RLBC composed of at least four bits B1, B2, B 3 and B4 and wherein [Vc1:Vc2:Vc3:Vc4] = Vout/N can be found so as to realise various duty cycles D = P/N.

Let us now define the switching command laws of RLBC circuit. Basically, each bit voltage Vb1...Vb4 is expressed as a function of time by:

$$Vbi = \sum_{j=1}^{N} Vbij \Lambda(t - j\Delta T) \text{ with } i = 1 \text{ to } 4$$

Where $\Lambda(t)$ represents the step function of time interval width $\Delta T$, $N\Delta T$ represents the duration of the switching cycle of switch S4. As for the control command law of switch Si1, Si2 can take their value in {0; 1}, voltage Vbij takes values in {-Vc$_i$, 0; Vc$_i$} at the j$^{th}$ time interval $T_j$ according to the law

$$\varepsilon_{i,j} = 1 - Si1_j - Si2_j$$

Si1$_j$ and Si2$_j$ are equal to one when the switches Silj and Si2 are in ON state or conductive state at the j$^{th}$ time interval $T_j$ and are equal to null value when the switches Silj and Si2 are in OFF state or non conductive state at the j$^{th}$ time interval Tj.

Let us further assume that Vbi is defined as an integer number of a reference voltage number $V_{ref}$, we get the following equation :

$$Vbij = \varepsilon_{ij} 2^{i-1} V_{ref}$$

If we now apply the voltage balancing condition of RLBC circuit in the conduction mode (S4 = 1), then during the P first time intervals of the switching cycle of switch S4, we get:

$$\forall j \leq P \qquad Vin = \sum_{i} Vbij$$

If we now apply the voltage balancing condition of RLBC circuit in the discontinuous mode (S4 = 0), then during the N-P last time intervals of the switching cycle of switch S4, we get:

$$\forall j > P \qquad Vin = \sum_{i} Vbij + Vout$$

Under steady state analysis, the balance of each capacitor charge should be verified, this can be expressed by :

$$\forall i \leq K \qquad \sum_{j=1}^{N} \varepsilon_{ij} = 0$$

With above conditions met, the boost behaviour can be verified if we compute the following terms :

$$\sum_{j=1}^{N}\sum_{i=1}^{n} Vbij = \sum_{j=1}^{P}\sum_{i=1}^{n} Vbij + \sum_{j=P+1}^{N}\sum_{i=1}^{n} Vbij = P(Vin) + (N-P)(Vin - Vout)$$
$$= (P-N)Vout + NVin$$

$$\sum_{j=1}^{N}\sum_{i=1}^{n} Vbij = \sum_{j=1}^{N}\sum_{i=1}^{n} 2^{i-1}V_{ref}\varepsilon_{ij} = \sum_{i=1}^{n} 2^{i-1}V_{ref}\sum_{j=1}^{N}\varepsilon_{ij} = 0$$

$$Vout = \frac{N}{N-P}Vin$$

Where n is equal to the number of bits.

This proves that the boost conversion of ratio D = N/N-P can be realised provided that conditions

$$Vin - \sum_i Vbij = 0 \ , \ Vin = \sum_i Vbij + Vout \ \text{and} \ \sum_{j=1}^{N} \varepsilon_{ij} = 0$$

are met.

$$\forall j \leq P \quad \sum_i Vbij = V_{ref}\sum_i \varepsilon_{ij}k_i = Vin \qquad\qquad \text{(a)}$$

$$\forall j > P \quad \sum_i Vbij = V_{ref}\sum_i \varepsilon_{ij}k_i = Vin - Vout = \frac{P}{N-P}Vout \qquad \text{(b)}$$

with $k_i$=1, 1, 1 or 4

Let us now introduce the following term $\Omega_j$ : $\quad \Omega_j = \sum_i k_i\varepsilon_{ij}$

From (a) and (b), we can obtain :

$$\forall j \leq P, \Omega_j = Vin / V_{ref} = \alpha\left(N - P\right)$$

$$\forall j > P, \Omega_j = -\frac{P}{N-P}Vin / V_{ref} = -P\alpha$$

$$\alpha = \frac{Vin / V_{ref}}{N-P}$$

It should be noted that, as $V_{ref}$ can be set arbitrarily, we can decide to let $\alpha$ equal to 1, it is enough to find a set of switching rules $\{\varepsilon_{ij}\}$

$$\begin{cases} \forall j \leq P, \Omega_j = N - P \\ \forall j > P, \Omega_j = -P \end{cases}$$

It should be noted that $V_{ref}$ can be further expressed as $\quad V_{ref} = \dfrac{Vout}{N}$

Finding a solution to the switching pattern of RLBC with n bits consists, for a given pair of integers {N, P}and a given vector K of integers in finding a matrix ($\varepsilon$) of size (Nxn) and with elements in {-1; 0; 1} such that

(i) the matrix ($\varepsilon$) verifies $\forall i \leq K \quad \sum_{j=1}^{N} \varepsilon_{ij} = 0$ and

(ii) $\vec{\Omega} = (\Omega_1; \Omega_2; ...; \Omega_N) = (\varepsilon).\vec{K}$ has P elements of value in N-P, and N-P elements of values -P.

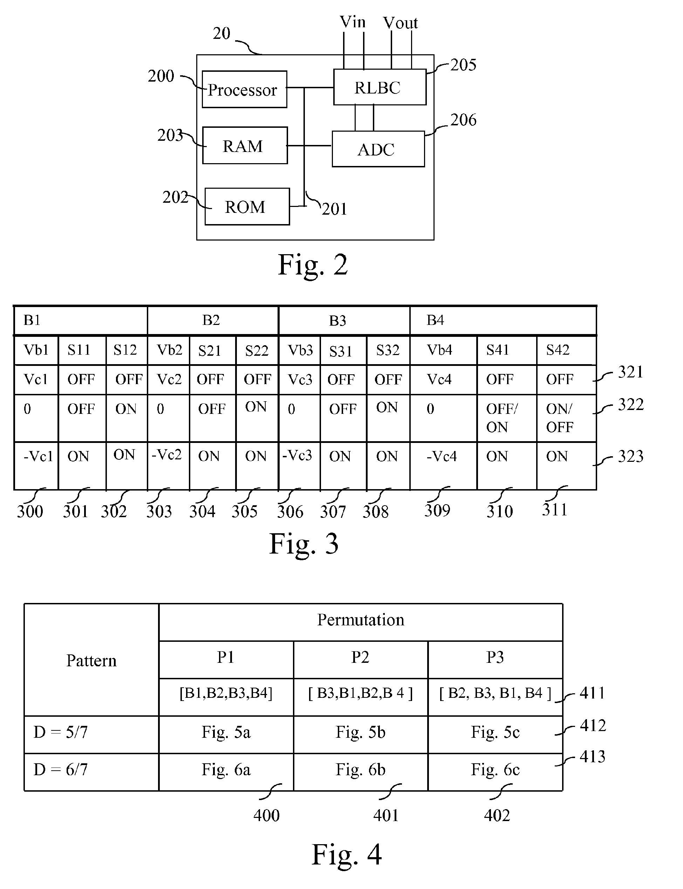

In the present invention each matrix disclosed in Figs. 4 verifies the conditions (i) and (ii) for an example vector K = [1 1 1 4]. Other matrix can be found for other P/N ratios and other vectors K, according to above principles.

Because each RLBC switching pattern has to verify strictly conditions (i) and (ii), the charge and discharge pattern of each capacitor is fixed for a given duty cycle, and sometimes different across capacitors, leading to imbalance of RMS current level passing through each bit. High RMS levels of current typically degrade the lifetime of the capacitors.

Moreover, in practise it is impossible to strictly guarantee that durations of the N time intervals of the switching patterns applied to switches are strictly equal. Small duration discrepancy can lead to instability of bit voltages, as application of one switching pattern over can lead to very slowly charging or discharging of the corresponding capacitor.

As a result, the vector K which can be realised with a given matrix eij, might smoothly drift, if the matrix is not of full rank over the used bits being activated with the switching pattern, as many vectors K can verify condition (ii) in the latter case. It might result in drifting of capacitor bit voltage to some level which can exceed the rated voltage of the corresponding bit bridge devices, causing degradation of the lifetime of the capacitor and of switches.

**Fig. 2** represents an example of an apparatus comprising a boost converter composed of plural bridge devices.

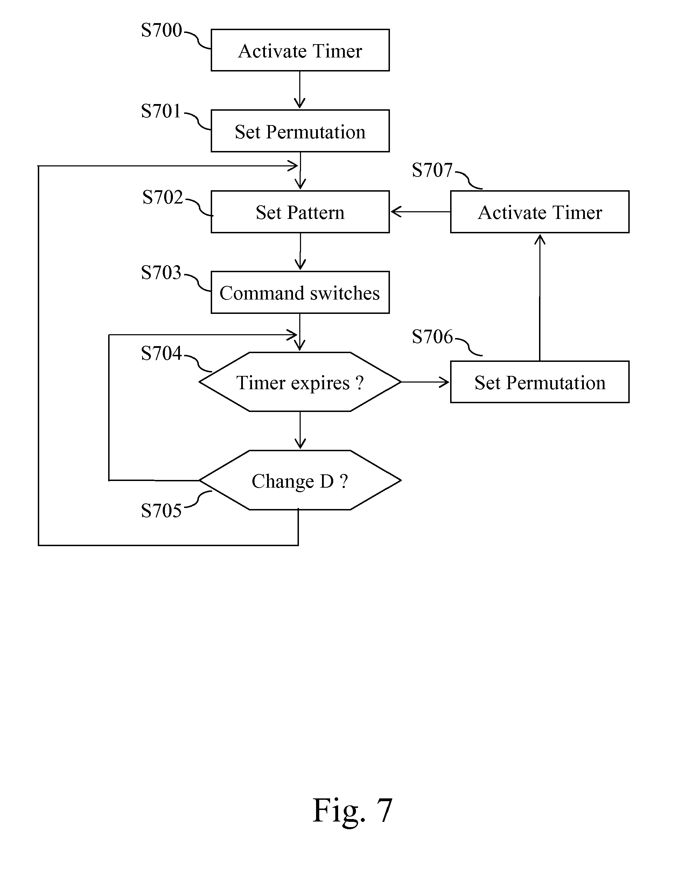

The apparatus 20 has, for example, an architecture based on components connected together by a bus 201 and a processor 200 controlled by the program related to the algorithm as disclosed in the Fig. 7.

It has to be noted here that the apparatus 20 is, in a variant, implemented under the form of one or several dedicated integrated circuits which execute the same operations as the one executed by the processor 200 as disclosed hereinafter.

The bus 201 links the processor 200 to a read only memory ROM 202, a random access memory RAM 203, an analogue to digital converter ADC 206 and the RLBC module as the one disclosed in Fig. 1.

The read only memory ROM 202 contains instructions of the program related to the algorithm as disclosed in the Fig. 7 which are transferred, when the device 20 is powered on to the random access memory RAM 203.

The read only memory ROM 202 memorizes the tables shown in Figs. 3, 4, 5 and 6.

The RAM memory 203 contains registers intended to receive variables, and the instructions of the program related to the algorithm as disclosed in the Fig.7.

The analogue to digital converter 206 is connected to the RLBC and converts voltages representative of the input voltage Vin and/or the output voltage Vout into binary information.

**Fig. 3** represents a table representing the switching states of the switches of the boost converter shown in Fig. 1 in order to obtain different voltages on bridges of the boost converter composed of plural bridge devices.

The columns 300 to 302 are related to the bit B1, the columns 303 to 305 are related to the bit B2, the columns 306 to 308 are related to the bit B3 and the columns 309 to 311 are related to the bit B4.

The line 321 shows that for a voltage Vb1 which is equal to Vc1, the switch S11 is in non conductive state and the switch S 12 is in non conductive state, for a voltage Vb2 which is equal to Vc2, the switch S21 is in non conductive state and the switch S22 is in non conductive state, for a voltage Vb3 which is equal to Vc3, the switch S31 is in non conductive state and the switch S32 is in non conductive state and for a voltage Vb4 which is equal to Vc4, the switch S41 is in non conductive state and the switch S42 is in non conductive state.

The line 322 shows that for a voltage Vb1 which is equal to null value, the switch S11 is in non conductive state and the switch S12 is in conductive state, for a voltage Vb2 which is equal to null value, the switch S21 is in non conductive state and the switch S22 is in conductive state, for a voltage Vb3 which is equal to null value, the switch S31 is in non conductive state and the switch S32 is in conductive state and for a voltage Vb4 which is equal to null value, the switch S41 is in non conductive state when the switch S42 is in conductive state or the switch S41 is in conductive state when the switch S42 is in conductive state.

The line 323 shows that for a voltage Vb1 which is equal to -Vc1, the switch S11 is in conductive state and the switch S 12 is in conductive state, for a voltage Vb2 which is equal to -Vc2, the switch S21 is in conductive state and the switch S22 is in conductive state, for a voltage Vb3 which is equal to -Vc3, the switch S31 is in conductive state and the switch S32 is in conductive state and for a voltage Vb4 which is equal to -Vc4, the switch S41 is in conductive state and the switch S42 is in conductive state.

Fig. 4 represents a table representing the periodical patterns in order to obtain different boost ratios for different permutations of one periodical pattern.

The table of Fig. 4 comprises three columns noted 400 to 402. Column 400 shows the Figs to be selected according to the selected duty cycle D, when a first permutation P1 of bits is used. Column 401 shows the Figs to be selected according to the selected duty cycle D, when a second permutation P2 of bits is used. Column 402 shows the Figs to be selected according to the selected duty cycle D, when a third permutation P3 is used.

In line 411, the vector [B1, B2, B3, B4] of column 400 indicates that permutation P1 is not permuting any bit. The vector [B3, B1, B2, B4] of column 401 indicates that the switching pattern of bits B3, B1, B2 and B4 of permutation P1 is applied to respectively bits B1, B2, B3 and B4 for permutation P2. The vector [B2, B3, B1, B4] of column 402 indicates that the switching pattern of bit B2, B3, B1, B4 of permutation P1 is applied to respectively bits B1, B2, B3 and B4 of permutation P3.

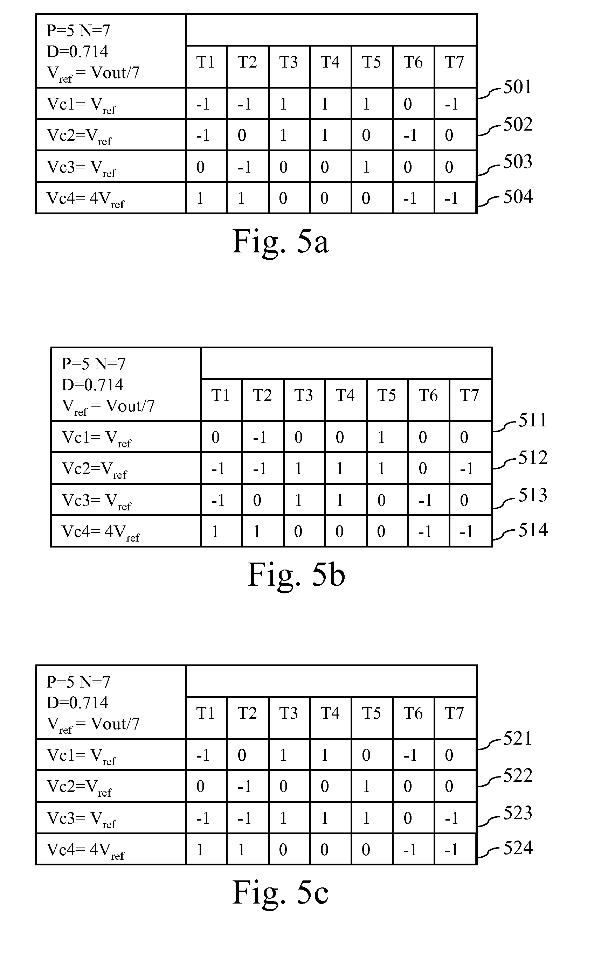

Line 412 shows the Figs to be selected when the duty cycle equals 5/7. Fig. 5a is selected if permutation is P1, Fig. 5b is selected if permutation is P2, Fig. 5c is selected if permutation is P3.

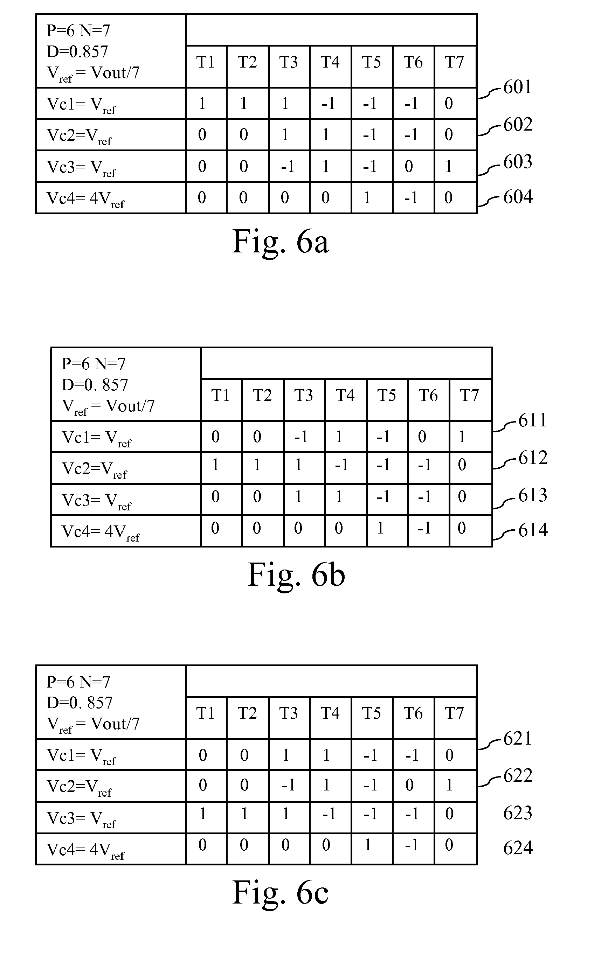

Line 413 shows the Figs to be selected when the duty cycle equals 6/7. Fig. 6a is selected if permutation is P1, Fig. 6b is selected if permutation is P2, Fig. 6c is selected if permutation is P3.

**Figs. 5a to 5c** are examples of voltage values on the bridges of the boost converter composed of plural bridge devices in order to obtain a first boost ratio according to the present invention.

In the lines 501, 511 and 521 a value which is equal to 1 means that Vb1=$V_{ref}$, a value which is equal to -1 means Vb1=-$V_{ref}$ and a value which is equal to 0 means Vb1=0.

In the lines 502, 512 and 522 a value which is equal to 1 means that Vb2=$V_{ref}$, a value which is equal to -1 means Vb2=-$V_{ref}$ and a value which is equal to 0 means Vb2=0.

In the lines 503, 513 and 523 a value which is equal to 1 means that Vb3=$V_{ref}$, a value which is equal to -1 means Vb3=-$V_{ref}$ and a value which is equal to 0 means Vb3=0.

In the lines 504, 514 and 524 a value which is equal to 1 means that Vb4=4$V_{ref}$, a value which is equal to -1 means Vb4=-4$V_{ref}$ and a value which is equal to 0 means Vb3=0.

The duration of each time interval T1 to T7 is $\Delta T=T/N$ (N=7), where T is the duration of the cycle operated by switch S4 of the Fig. 1.

The switch S4 is in conductive state during time intervals T1 to T5 (P=5) and in non conductive state at time intervals T6 and T7 (N=7).

**Fig. 5a** comprises voltage values on the bridges of the RLBC in order to have a ratio Vout/Vin=N/(N-P)= 3.5 (D=0.714).

Seven time intervals are needed in order to get a ratio Vout/Vin= 3.5.

At time interval T1, Vb1=-$V_{ref}$, Vb2=-$V_{ref}$ Vb3=0 and Vb4=4$V_{ref}$. At time interval T2, Vb1=-$V_{ref}$, Vb2=0, Vb3=-$V_{ref}$ and Vb4=4$V_{ref}$. At time intervals T3 and T4, Vb1=$V_{ref}$, Vb2=$V_{ref}$, Vb3=0 and Vb4=0. At time interval T5, Vb1=$V_{ref}$, Vb2=0, Vb3=$V_{ref}$ and Vb4=0. At time interval T6, Vb1=0, Vb2=-$V_{ref}$, Vb3=0 and Vb4=-4$V_{ref}$. At time interval T7, Vb1=-$V_{ref}$, Vb2=0, Vb3=0 and Vb4=-4$V_{ref}$.

When we consider of the table of the Fig. 5a, we can conclude that the RMS currents in the capacitors C1, C2 and C3 of the bits B1, B2 and B3 are as follows:

$$I_{C1} = \sqrt{\frac{1}{T}\int i^2 dt} = \sqrt{\frac{1}{T}\cdot\frac{6T}{7}\cdot I_{PV}^2} = \sqrt{\frac{6}{7}}\cdot I_{PV}$$

$$I_{C2} = \sqrt{\frac{1}{T}\int i^2 dt} = \sqrt{\frac{1}{T}\cdot\frac{4T}{7}\cdot I_{PV}^2} = \sqrt{\frac{4}{7}}\cdot I_{PV}$$

$$I_{C3} = \sqrt{\frac{1}{T}\int i^2 dt} = \sqrt{\frac{1}{T}\cdot\frac{2T}{7}\cdot I_{PV}^2} = \sqrt{\frac{2}{7}}\cdot I_{PV}$$

where Ipv is the current generated by the Electric DC providing means, 7 denotes the number of time intervals of the periodical pattern shown in Fig. 5a, 6 is the number of time intervals Vb1=$V_{ref}$ or -$V_{ref}$, 4 is the number of time intervals Vb2=$V_{ref}$ or -$V_{ref}$ and 2 is the number of time intervals Vb3=$V_{ref}$ or -$V_{ref}$.

It can be clearly seen that $I_{C1}>I_{C2}>I_{C3}$ and thus, as more energy is charged and discharged in the capacitor C1 capacitor per switching pattern, more the lifetime of the capacitor C1 is reduced in comparison with the capacitors C2 and C3.

The capacitor of bit B1 will abnormally age and probably fail before the capacitors C2 and C3, linking the RLBC lifetime to the capacitor C1 lifetime.

According to the invention, in order to level the aging of all the capacitors, the present invention permutes the switching patterns of each of the three bits B1, B2 and B3.

By doing so, the currents which will charge the capacitors C1, C2 and C3 will have the same average values.

In a first realisation of the invention, the permutation of switching patterns of bits is executed at each periodical pattern of size 7 time intervals, and each periodical pattern of duration 7 time intervals is repeated cyclically every 3 consecutive patterns.

The resulting equivalent periodic switching pattern has now become of size 21 time intervals. Instead of dividing the periodical pattern into 7 time intervals, the latter will now be divided in 21 time intervals. Each capacitor C1, C2 and C3 will withstand a RMS current Ic as follows:

$$I_C = \sqrt{\frac{1}{T}\int i^2 dt} = \sqrt{\frac{1}{T}\cdot\frac{12T}{21}\cdot I_{PV}^2} = \sqrt{\frac{4}{7}}\cdot I_{PV}\,.$$

In a second realisation of invention, the permutation of switching patterns is realised on a larger period basis, typically a day or a week. In a preferred embodiment, the most aging pattern is then assigned to less aged capacitor bit. In another embodiment, the less aging pattern is then assigned to the most aged capacitor bit.

**Fig. 5b** comprises voltage values on the bridges of the RLBC in which the switching patterns of the switches of B1, B2 and B3 are respectively set to the switching patterns of the switches B3, B1 and B2 of Fig. 5a. The switching pattern described by Fig. 5b is the result of permutation P2 of the switching pattern of Fig. 5a.
At time interval T1, Vb1=0, Vb2=-$V_{ref}$, Vb3=-$V_{ref}$ and Vb4=4$V_{ref}$. At time interval T2, Vb1=-$V_{ref}$, Vb2=-$V_{ref}$, Vb3=0 and Vb4=4$V_{ref}$. At time intervals T3 and T4, Vb1=0, Vb2=$V_{ref}$, Vb3=$V_{ref}$ and Vb4=0. At time interval T5, Vb1=$V_{ref}$, Vb2=$V_{ref}$, Vb3=0 and Vb4=0. At time interval T6, Vb1=0, Vb2=0, Vb3=-$V_{ref}$ and Vb4=-4$V_{ref}$. At time interval T7, Vb1=0, Vb2=-$V_{ref}$, Vb3=0 and Vb4=-4$V_{ref}$.

**Fig. 5c** comprises voltage values on the bridges of the RLBC in which the switching patterns of the switches of B1, B2 and B3 are respectively set to the switching patterns of the switches of B2, B3 and B1 of Fig.5a. The switching pattern described by Fig. 5c is the result of permutation P3 of the switching pattern of Fig. 5a.

At time interval T1, Vb1=-$V_{ref}$, Vb2=0, Vb3=-$V_{ref}$ and Vb4=4$V_{ref}$. At time interval T2, Vb1=0, Vb2=-$V_{ref}$, Vb3=-$V_{ref}$ and Vb4=4$V_{ref}$. At time intervals T3 and T4, Vb1=$V_{ref}$, Vb2=0, Vb3=$V_{ref}$ and Vb4=0. At time interval T5, Vb1=0, Vb2=$V_{ref}$, Vb3=$V_{ref}$ and Vb4=0. At time interval T6, Vb1=-$V_{ref}$, Vb2=0, Vb3=0 and Vb4=-4$V_{ref}$. At time interval T7, Vb1=0, Vb2=0, Vb3=-$V_{ref}$ and Vb4=-4$V_{ref}$.

**Figs. 6a to 6c** are examples of voltage values on the bridges of the boost converter composed of plural bridge devices in order to obtain a second boost ratio according to the present invention;

In the lines 601, 611 and 621 a value which is equal to 1 means that Vb1=$V_{ref}$, a value which is equal to -1 means Vb1=-$V_{ref}$ and a value which is equal to 0 means Vb1=0.

In the lines 602, 612 and 622 a value which is equal to 1 means that Vb2=$V_{ref}$, a value which is equal to -1 means Vb2=-$V_{ref}$ and a value which is equal to 0 means Vb2=0.

In the lines 603, 613 and 623 a value which is equal to 1 means that Vb3=$V_{ref}$, a value which is equal to -1 means Vb3=-$V_{ref}$ and a value which is equal to 0 means Vb3=0.

In the lines 604, 614 and 624 a value which is equal to 1 means that Vb4=4$V_{ref}$, a value which is equal to -1 means Vb4=-4$V_{ref}$ and a value which is equal to 0 means Vb3=0.

The duration of each time interval T1 to T7 is $\Delta$T=T/N (N=7), where T is the duration of the cycle operated by switch S4 of the Fig. 1.

The switch S4 is in conductive state during time intervals T1 to T6 (P=6) and in non conductive state at time interval T7 (N=7).

**Fig. 6a** comprises voltage values on the bridges of the RLBC in order to have a second ratio Vout/Vin=N/(N-P)= 7 (D=0.857).

Seven time intervals are needed in order to get a ratio Vout/Vin= 7.

At time intervals T1 and T2, Vb1=$V_{ref}$, Vb2=Vb3=Vb4=0. At time interval T3, Vb1=Vb2=$V_{ref}$, Vb3=-Vref, and Vb4=0. At time interval T4, Vb1=-$V_{ref}$, Vb2=Vb3=$V_{ref}$, and Vb4=0. At time interval T5, Vb1=Vb2=Vb3=-$V_{ref}$, Vb4=4Vref. At time interval T6, Vb1=Vb2=-$V_{ref}$, Vb3=0 and Vb4=-4$V_{ref}$. At time interval T7, Vb3=$V_{ref}$, and Vb1=Vb2=Vb4=0.

**Fig. 6b** comprises voltage values on the bridges of the RLBC in which the switching patterns of the switches of B1, B2 and B3 are respectively set to the switching patterns of the switches B3, B1 and B2 of Fig. 6a. The switching pattern described by Fig. 6b is the result of permutation P2 of the switching pattern of Fig. 6a.

At time intervals T1 and T2, Vb2=$V_{ref}$, Vb1=Vb3=Vb4=0. At time interval T3, Vb3=Vb2=$V_{ref}$, Vb1=-Vref, and Vb4=0. At time interval T4, Vb2=-$V_{ref}$, Vb1=Vb3=$V_{ref}$, and Vb4=0. At time interval T5, Vb1=Vb2=Vb3=-$V_{ref}$, Vb4=4Vref.

At time interval T6, Vb3=Vb2=-V$_{ref}$, Vb1=0 and Vb4=-4V$_{ref}$. At time interval T7, Vb1=V$_{ref,}$ and Vb3=Vb2=Vb4=0.

**Fig. 6c** comprises voltage values on the bridges of the RLBC in which the switching patterns of the switches of B1, B2 and B3 are respectively set to the switching patterns of the switches B2, B3 and B1 of Fig. 6a. The switching pattern described by Fig. 6c is the result of permutation P3 of the switching pattern of Fig. 6a.

At time intervals T1 and T2, Vb3=V$_{ref}$, Vb1=Vb2=Vb4=0. At time interval T3, Vb3=Vb1=V$_{ref}$, Vb2=-Vref, and Vb4=0. At time interval T4, Vb3=-V$_{ref}$, Vb2=Vb3=V$_{ref}$, and Vb4=0. At time interval T5, Vb1=Vb2=Vb3=-V$_{ref,}$ Vb4=4Vref. At time interval T6, Vb3=Vb1=-V$_{ref,}$ Vb2=0 and Vb4=-4V$_{ref}$. At time interval T7, Vb2=V$_{ref,}$ and Vb3=Vb1=Vb4=0.

**Fig. 7** is an example of an algorithm for controlling the switches of a boost converter composed of plural bridge devices.

More precisely, the present algorithm is executed by the processor 200 of the apparatus 20.

At step S700, the processor 200 activates a timer. The timer duration is equal to an integer number of periodical patterns.

The timer duration may be equal to one periodical pattern or may be in order of size of minute or hour or day or weeks.

At next step S701, the processor 200 selects a permutation among permutations P1, P2 and P3. For example, the processor 200 selects the permutation P2.

At next step S702, the processor 200 selects, in the ROM memory 202, a first periodical switching pattern which enables the output voltage to reach a given range of output voltages. For example, the processor 200 selects either switching pattern described by Fig. 5a or Fig.6a, and applies on the selected switching pattern the permutation selected at step S701 or S706. For example, the processor 200 selects a switching pattern which provides an output voltage within a given range of output voltage, e.g. according to the duty cycle determined at step S705 which will be disclosed later on.

At the same step, the processor 200 sets the working switching pattern to the permuted switching pattern. For example, if processor 200 has selected the switching pattern described by Fig. 5a and if permutation P2 was selected at step S701, the processor 200 sets, according to the table described in Fig. 4, the working switching pattern as the permuted switching pattern described by Fig. 5b.

At next step S703, the processor 200 commands the switches of the RLBC according to the switching pattern set at step S702.

At next step S704, the processor 200 checks if the timer activated at step S700 or S707 is elapsed.

If the timer activated at step S704 is elapsed, the processor 200 moves to step S706. Otherwise, the processor 200 moves to step S705.

At step S705, the processor 200 checks if another duty cycle D has to be applied. Another duty cycle has to be applied, for example, if the output voltage provided by set switching pattern is getting outside a given range of output voltage.

If another duty cycle has to be applied, then, processor 200 determines the new duty cycle, within the set of duty cycles listed in Fig. 4, as the new duty cycle which provides an output voltage within the given range of output voltage.

If another duty cycle has to be applied, the processor 200 returns to step S702. Else, processor 200 returns to step S704.

At step S706, the processor 200 selects a permutation to be applied to the switching patterns set at step S702. For example, if processor 200 previously applied at previous step S702 permutation Pi with i=1 to 3, processor 200 sets the permutation to P(i+1) modulo three.

As other example, processor 200 determines the extra aging of each bit capacitor from a current meter averaged since the last permutation decision, and selects the permutation will age less the most aged capacitor.

As yet other example, processor 200 determines the extra aging of each bit capacitor from a current meter averaged since the last permutation decision, and selects the permutation will age most the least aged capacitor.

As yet other example, processor 200 determines the extra aging of each bit capacitor from a current meter averaged since the last permutation decision, and selects the permutation will minimise the difference if aging between capacitors.

As yet other example, the processor 200 :

- estimates, for each periodical pattern, the current passing through one bridge device when the switches of the bridge device are controlled by the periodical pattern,
- estimates for each bridge device of said at least part of the plural bridge devices, the current cumulated over the time having passed through the bridge device.

The processor selects for each bridge device Bi, the periodical pattern applied on the bridge device B(i+1) or B(i+2) modulo three which estimated current cumulated over the time is higher than the estimated current cumulated over the time of the bridge device Bi and the periodical pattern applied on the bridge device B(i+1) or B(i+2) modulo three which estimated current is higher than the estimated current of the periodical pattern which controls the switches of the bridge device Bi.

The processor selects for each bridge device Bi, the periodical pattern applied on the bridge device B(i+1) or B(i+2) modulo three which estimated current cumulated over the time is lower than the estimated current cumulated over the time of the bridge device Bi and the periodical pattern applied on the bridge device B(i+1) or B(i+2) modulo three which estimated current is lower than the estimated current of the periodical pattern which controls the switches of the bridge device Bi.

At next step S707, the processor 200 activates the timer as disclosed at step S700 and moves to step S702.

Naturally, many modifications can be made to the embodiments of the invention described above without departing from the scope of the present invention.

**Claims**

1. Method for controlling the switches of a boost converter composed of plural bridge devices connected in series, each bridge device being composed of a capacitor and plural switches, **characterised in that** the method comprises the steps of :

   - controlling the switches of each bridge device of at least a part of the plural bridge devices according to a given periodical pattern during a first time period,
   - controlling, during a second time period following the first time period, the switches of each bridge device of said at least part of the plural bridge devices according to a periodical pattern previously used for controlling the switches of another bridge device of said at least part of the plural bridge devices during the first time period.

2. Method according to claim 1, **characterised in that**, in a first given group of successive time periods, the switches of each bridge device of said at least part of the plural bridge devices are successively controlled according to each periodical pattern used for controlling the switches of each bridge device of said at least part of the plural bridge devices during the first group of successive time periods.

3. Method according to claims 1 and 2, **characterised in that** for each bridge device of said at least part of the plural bridge device, the other bridge device which is controlled in the first time period with the periodical pattern with which the bridge device is controlled in the second time period is same over any successive time periods.

4. Method according to claim 2 and 3, **characterised in that** the method comprises further steps of:

   - selecting for a second group of successive time periods following the first given group of successive time periods, other periodical patterns for controlling the switches of each bridge device of said at least part of the plural bridge devices in the time periods of the second group of successive time periods,
   - successively controlling the switches of each bridge device of said at least part of the plural bridge devices according to each periodical pattern used for controlling the switches of each bridge device of said at least part of the plural bridge devices during the second group of successive time periods following the first group of successive of time periods.

5. Method, according to claims 1 and 2, **characterised in that** the method comprises further step of selecting at each time period and for each bridge device, the other bridge device which is controlled by the periodical pattern with which the bridge device is controlled in the second time period.

6. Method, according to claim 5, **characterised in that** each other bridge device is selected by:

   - estimating, for each periodical pattern, the current passing through one bridge device when the switches of the bridge device are controlled by the periodical pattern,
   - estimating for each bridge device of said at least part of the plural bridge devices, the current cumulated over the time having passed through the bridge device, and the other bridge device is a bridge device which estimated current cumulated over the time is higher than the estimated current cumulated over the time of the bridge device and the other selected bridge device is a bridge device controlled in the first time period with a periodical pattern which estimated current is higher than the estimated current of the periodical pattern which controls the switches of the bridge device in the first time period,
   or the other bridge device is a bridge device which estimated current cumulated over the time is lower than the estimated current cumulated over the time of the bridge device and the other bridge device is a bridge device controlled in the first time period with a periodical pattern which estimated current is lower than the estimated current of the periodical pattern which controls the switches of the bridge device in the first time period, or the other bridge device is the bridge device.

7. Method according to claim 6, **characterised in that** the estimated current passing through a bridge device of which the switches are controlled by one periodical pattern equals the input current of the boost converter composed of plural bridge devices averaged over the time duration times one minus the number of time intervals for which the voltage between the input and the output of the bridge device is a null value divided by the number of time intervals of the periodical pattern.

8. Method according to claim 6 or 7, **characterised in that** the estimated cumulative current having passed through each bridge device is incremented by the estimated current passing through a bridge device the switches of which are controlled by the periodical pattern times the duration of the time period.

9. Method according to any of the claims 1 to 8, **characterised in that** the boost converter is composed of four bridge devices, said at least part of the plural bridge devices comprises a first, a second and a third bridge devices, each periodical pattern is decomposed into time intervals and **in that** in each time interval of periodical pattern used for controlling the switches of the first, second and third bridge devices, the voltage between the input and the output of the first, second and third bridge device is equal to a positive value or minus the first positive value or a null value and the voltage between the input and the output of the fourth bridge device is equal to four times the positive value or minus four times the positive value or a null value, and the said at least part of the plural bridge devices is composed of first, second and third bridge device.

10. Method according to claim 9, **characterised in that** the positive value is the result of the division of an expected value of the output voltage by the number of time intervals of the periodical patterns.

11. Method according to claim 10, **characterised in that** the sum of the voltages between the input and the output of a bridge device over the number of time intervals of one periodical pattern equals a null value.

12. Method according to any of the claims 1 to 11, **characterised in that** one bridge device is connected to one of the terminals of an electric power source boosted by the boost converter composed of plural bridge devices and the boost converter composed of plural bridge devices further comprises at least another switch which is connected to the other terminal of the electric power source boosted by the boost converter composed of plural bridge devices.

13. Method according to claim 12, **characterised in that** for any time interval in a first subset of time intervals of the periodical pattern, the switch which is connected to the other terminal of the electric power source boosted by the boost converter composed of plural bridge devices is conducting during the time intervals of the first subset and the sum of the voltages between the input and the output of the bridge devices during the time intervals of the first subset equals an integer number Kp times the first positive value.

14. Method according to claim 13, **characterised in that** for any time interval in a second subset of time intervals of one periodical pattern, the switch which is connected to the other terminal of the electric power source boosted by the boost converter composed of plural bridge devices is not conducting during the time intervals of the second subset and the sum of the voltages between the input and the output of the bridge devices during the time intervals of the second subset equals minus a non null integer number P times the first positive value.

15. Method according to claim 14, **characterised in that** the first subset of time intervals comprises Kp time intervals, the second subset comprises P time intervals and the number Kp equals the number of time intervals of the periodical pattern minus number P.

16. Apparatus for controlling the switches of a boost converter composed of plural bridge devices connected in series, each bridge device being composed of a capacitor and plural switches, **characterised in that** the apparatus comprises :

- means for controlling the switches of each bridge device of at least a part of the plural bridge devices according to a given periodical pattern during a first time period,
- means for controlling, during a second time period following the first time period, the switches of each bridge device of said at least part of the plural bridge devices according to a periodical pattern previously used for controlling the switches of another bridge device of said at least part of the plural bridge devices during the first time period.

Fig. 1

Fig. 2

| B1 | | | B2 | | | B3 | | | B4 | | | |
|---|---|---|---|---|---|---|---|---|---|---|---|---|
| Vb1 | S11 | S12 | Vb2 | S21 | S22 | Vb3 | S31 | S32 | Vb4 | S41 | S42 | |
| Vc1 | OFF | OFF | Vc2 | OFF | OFF | Vc3 | OFF | OFF | Vc4 | OFF | OFF | 321 |
| 0 | OFF | ON | 0 | OFF | ON | 0 | OFF | ON | 0 | OFF/ON | ON/OFF | 322 |
| -Vc1 | ON | ON | -Vc2 | ON | ON | -Vc3 | ON | ON | -Vc4 | ON | ON | 323 |

Fig. 3

| | Permutation | | |
|---|---|---|---|
| Pattern | P1 | P2 | P3 |
| | [B1,B2,B3,B4] | [ B3,B1,B2,B 4 ] | [ B2, B3, B1, B4 ] | 411 |
| D = 5/7 | Fig. 5a | Fig. 5b | Fig. 5c | 412 |
| D = 6/7 | Fig. 6a | Fig. 6b | Fig. 6c | 413 |

Fig. 4

| P=5 N=7 D=0.714 $V_{ref}$ = Vout/7 | T1 | T2 | T3 | T4 | T5 | T6 | T7 | |
|---|---|---|---|---|---|---|---|---|
| Vc1= $V_{ref}$ | -1 | -1 | 1 | 1 | 1 | 0 | -1 | 501 |
| Vc2=$V_{ref}$ | -1 | 0 | 1 | 1 | 0 | -1 | 0 | 502 |
| Vc3= $V_{ref}$ | 0 | -1 | 0 | 0 | 1 | 0 | 0 | 503 |
| Vc4= 4$V_{ref}$ | 1 | 1 | 0 | 0 | 0 | -1 | -1 | 504 |

## Fig. 5a

| P=5 N=7 D=0.714 $V_{ref}$ = Vout/7 | T1 | T2 | T3 | T4 | T5 | T6 | T7 | |
|---|---|---|---|---|---|---|---|---|
| Vc1= $V_{ref}$ | 0 | -1 | 0 | 0 | 1 | 0 | 0 | 511 |
| Vc2=$V_{ref}$ | -1 | -1 | 1 | 1 | 1 | 0 | -1 | 512 |
| Vc3= $V_{ref}$ | -1 | 0 | 1 | 1 | 0 | -1 | 0 | 513 |
| Vc4= 4$V_{ref}$ | 1 | 1 | 0 | 0 | 0 | -1 | -1 | 514 |

## Fig. 5b

| P=5 N=7 D=0.714 $V_{ref}$ = Vout/7 | T1 | T2 | T3 | T4 | T5 | T6 | T7 | |
|---|---|---|---|---|---|---|---|---|
| Vc1= $V_{ref}$ | -1 | 0 | 1 | 1 | 0 | -1 | 0 | 521 |
| Vc2=$V_{ref}$ | 0 | -1 | 0 | 0 | 1 | 0 | 0 | 522 |
| Vc3= $V_{ref}$ | -1 | -1 | 1 | 1 | 1 | 0 | -1 | 523 |
| Vc4= 4$V_{ref}$ | 1 | 1 | 0 | 0 | 0 | -1 | -1 | 524 |

## Fig. 5c

| P=6 N=7 D=0.857 $V_{ref}$ = Vout/7 | T1 | T2 | T3 | T4 | T5 | T6 | T7 | |
|---|---|---|---|---|---|---|---|---|
| Vc1= $V_{ref}$ | 1 | 1 | 1 | -1 | -1 | -1 | 0 | 601 |
| Vc2=$V_{ref}$ | 0 | 0 | 1 | 1 | -1 | -1 | 0 | 602 |
| Vc3= $V_{ref}$ | 0 | 0 | -1 | 1 | -1 | 0 | 1 | 603 |
| Vc4= 4$V_{ref}$ | 0 | 0 | 0 | 0 | 1 | -1 | 0 | 604 |

## Fig. 6a

| P=6 N=7 D=0. 857 $V_{ref}$ = Vout/7 | T1 | T2 | T3 | T4 | T5 | T6 | T7 | |
|---|---|---|---|---|---|---|---|---|
| Vc1= $V_{ref}$ | 0 | 0 | -1 | 1 | -1 | 0 | 1 | 611 |
| Vc2=$V_{ref}$ | 1 | 1 | 1 | -1 | -1 | -1 | 0 | 612 |
| Vc3= $V_{ref}$ | 0 | 0 | 1 | 1 | -1 | -1 | 0 | 613 |
| Vc4= 4$V_{ref}$ | 0 | 0 | 0 | 0 | 1 | -1 | 0 | 614 |

## Fig. 6b

| P=6 N=7 D=0. 857 $V_{ref}$ = Vout/7 | T1 | T2 | T3 | T4 | T5 | T6 | T7 | |
|---|---|---|---|---|---|---|---|---|
| Vc1= $V_{ref}$ | 0 | 0 | 1 | 1 | -1 | -1 | 0 | 621 |
| Vc2=$V_{ref}$ | 0 | 0 | -1 | 1 | -1 | 0 | 1 | 622 |
| Vc3= $V_{ref}$ | 1 | 1 | 1 | -1 | -1 | -1 | 0 | 623 |
| Vc4= 4$V_{ref}$ | 0 | 0 | 0 | 0 | 1 | -1 | 0 | 624 |

## Fig. 6c

S700 — Activate Timer

S701 — Set Permutation

S707 — Activate Timer

S702 — Set Pattern

S703 — Command switches

S704 — Timer expires ?

S706 — Set Permutation

S705 — Change D ?

Fig. 7

## EUROPEAN SEARCH REPORT

**Application Number**

EP 09 15 8620

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 469 569 B1 (MIYAMITSU FUMIAKI [JP]) 22 October 2002 (2002-10-22) * column 1; figures 1-3 * * column 3, line 49 - column 4, line 16 * * column 7, lines 37-52 * ----- | 1-3 | INV. H02M3/07 |
| A | ANDREA BONI, ALESSANDRO CARBONI, ALESSIO FACEN: "DC-DC converter for fuel-cells and portable devices in digital CMOS technology" ANALOG INTEGR CIRC SIG PROCESS, [Online] vol. 55, no. 1, 4 March 2008 (2008-03-04), pages 93-102, XP002548560 Retrieved from the Internet: URL:http://www.springerlink.com/content/e525468p4144m168/fulltext.pdf> [retrieved on 2009-10-02] * the whole document * ----- | 1-16 | |
| A | MICHAEL D. SEEMAN, SETH R. SANDERS: "Analysis and Optimization of Switched-Capacitor DC-DC Converters" IEEE WORKSHOPS ON COMPUTERS IN POWER ELECTRONICS, 2006. COMPEL '06, 16 July 2006 (2006-07-16), - 19 July 2006 (2006-07-19) pages 216-224, XP031044998 * figure 5 * ----- -/-- | 1-16 | **TECHNICAL FIELDS SEARCHED (IPC)** H02M |

The present search report has been drawn up for all claims

| Place of search | Date of completion of the search | Examiner |
|---|---|---|
| Munich | 2 October 2009 | Hanisch, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 09 15 8620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABUTBUL O ET AL: "Step-up switching-mode converter with high voltage gain using a switched-capacitor circuit" IEEE TRANSACTIONS ON CIRCUITS AND SYSTEMS PART I: REGULAR PAPERS, vol. 50, no. 8, 1 August 2003 (2003-08-01), pages 1098-1102, XP011099419 IEEE SERVICE CENTER, NEW YORK, NY, US ISSN: 1057-7122 * figure 1 * | 1-16 | |
| A | US 6 101 109 A (DUBA GREG A [US] ET AL) 8 August 2000 (2000-08-08) * column 2, lines 48-59; figures 1b,2,18 * | 1-16 | |

TECHNICAL FIELDS SEARCHED (IPC)

The present search report has been drawn up for all claims

| Place of search | Date of completion of the search | Examiner |
|---|---|---|
| Munich | 2 October 2009 | Hanisch, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 09 15 8620

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2009

| Patent document cited in search report | | Publication date | Patent family member(s) | | Publication date |
|---|---|---|---|---|---|
| US 6469569 | B1 | 22-10-2002 | JP | 2001069747 A | 16-03-2001 |
| US 6101109 | A | 08-08-2000 | DE | 69908469 D1 | 10-07-2003 |
| | | | DE | 69908469 T2 | 15-01-2004 |
| | | | EP | 0945971 A2 | 29-09-1999 |
| | | | JP | 11318086 A | 16-11-1999 |
| | | | US | 5933339 A | 03-08-1999 |
| | | | US | 6118932 A | 12-09-2000 |

EPO FORM P0459

For more details about this annex : see Official Journal of the European Patent Office, No. 12/82